# EUROPEAN PATENT SPECIFICATION

(11) **EP 3 115 788 B1**
(45) Date of publication and mention of the grant of the patent: **14.04.2021**
(21) Application number: 16177728.9
(22) Date of filing: 04.07.2016
(51) Int. Cl.: G01N 35/02, G01N 35/04

(54) **ANALYSIS APPARATUS**
ANALYSEVORRICHTUNG
APPAREIL D'ANALYSE

(30) Priority: 07.07.2015 GB 201511845
(43) Date of publication of application: 11.01.2017
(73) Proprietor: Bee Robotics Ltd, Caernarfon LL55 2BD (GB)
(72) Inventor: Jones, Steven, Caernarfon, LL55 2BD (GB); Morus, Alwyn, Caernarfon, LL55 2BD (GB)
(74) Representative: Hamilton, Alistair

(56) References cited:
- EP-A2- 0 625 708
- WO-A2-2007/054718
- US-A- 5 817 526
- US-A1- 2002 197 722

## Description

This invention relates to analysis apparatus. It has particular, but not exclusive, application to apparatus for automated assessment of pathological samples.

Chemical analysis of bulk samples can be carried out in a microplate in different formats, a microarray at the bottom of the well being one example. A standard microplate may have as many as 96 wells, each of which can hold up to 400µl of volume. The purpose is to allow multiple samples to be subject simultaneously to a substantially identical analysis procedure.

In a typical analysis cycle, each sample to be analysed is placed in a respective well, and one or more reagents are also added to each well. The entire plate is then subject to heating to a precisely defined temperature and, after a predetermined period, during which it may be subject to agitation, cooled to a precisely defined temperature. Each sample is then examined, typically by an automated imaging system either above or below the developed well, to determine the extent to which a reaction has proceeded. In general, each of these steps must be performed in spaced-apart stations of the apparatus, with the microplate being transported between stations to enable subsequent steps of the analysis to be performed.

It has been previously proposed to use a system that picks up the microplate at each station, moves it, and places it at the next station in the manner of a pick-and-place machine. However, such systems are complex to implement, and their configuration typically results in apparatus that is undesirably large.

WO2007054718 discloses automated immunoassay apparatus comprising an optical reading device for reading two microtitre plates. An upper plate holder is linearly translated at a fixed height. A lower plate holder runs along a contoured track which varies the vertical height of a second microtitre plate.

US5817526 discloses immunoassay method and apparatus in which particles are precipitated on the bottom of a container and the container is caused to stand at an inclination so as to cause the particles to flow along the bottom of the container to form a developed pattern of the particles.

EP0625708 discloses a method of indirect agglutination immunoassay that includes, allowing particles of a reagent for immunoassay to precipitate in bottoms of at least one well and inclining the well at a specified angle to form a precipitation pattern due to a flow of the particles in the bottom of the well.

US20020197722 discloses a process and apparatus for simultaneously moving a first sample plate into an analytical apparatus and a second sample plate from the analytical apparatus. The first sample plate is moved on an entry path which is vertically spaced apart from an exit path for the second sample plate.

An aim of this invention is to provide analysis apparatus that enables a microplate to be moved between processing stations that is more compact and easier to implement than existing apparatus.

To this end, from a first aspect, this invention provides analysis apparatus that includes automated microplate handling apparatus as set forth in claim 1.

Tilting the plate has several advantages. The microplate carrying means can continuously engage with linear transport means at all times, which simplifies construction and facilitates accurate movement. This also allows the entire apparatus to be compact, since space for a picking arm is not required.

Most typically, the hinge axis lies to one side of the operational stations. That is to say, the hinge axis typically does not intersect the microplate, but passes adjacent to it.

In at least one operational station, operation of the tilting means between the raised and the lowered position may cause a microplate secured on the microplate carrier means to be lowered into contact with functional apparatus at the operational station. This allows the microplate to be urged into contact with the functional apparatus to improve its effectiveness in, for example, transmission of heat or mechanical movement.

The functional apparatus may include means for heating and/or cooling the microplate. Alternatively or additionally, the functional apparatus may include means for adding liquid to or removing liquid from wells of the microplate. At least one operational station typically includes imaging apparatus.

From a second aspect, the invention provides a method of operating analysis apparatus that includes microplate handling apparatus as set forth in claim 7.

The hinge axis typically lies adjacent to the microplate carrying means.

An embodiment of the invention will now be described in detail, by way of example, and with reference to the accompanying drawings, in which:
Figure 1 shows a microplate assessment apparatus;

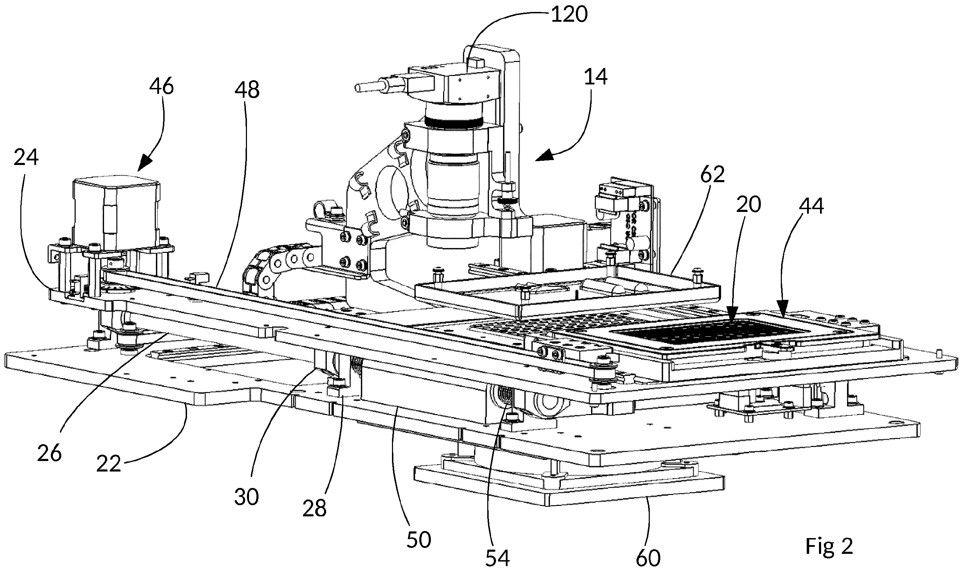

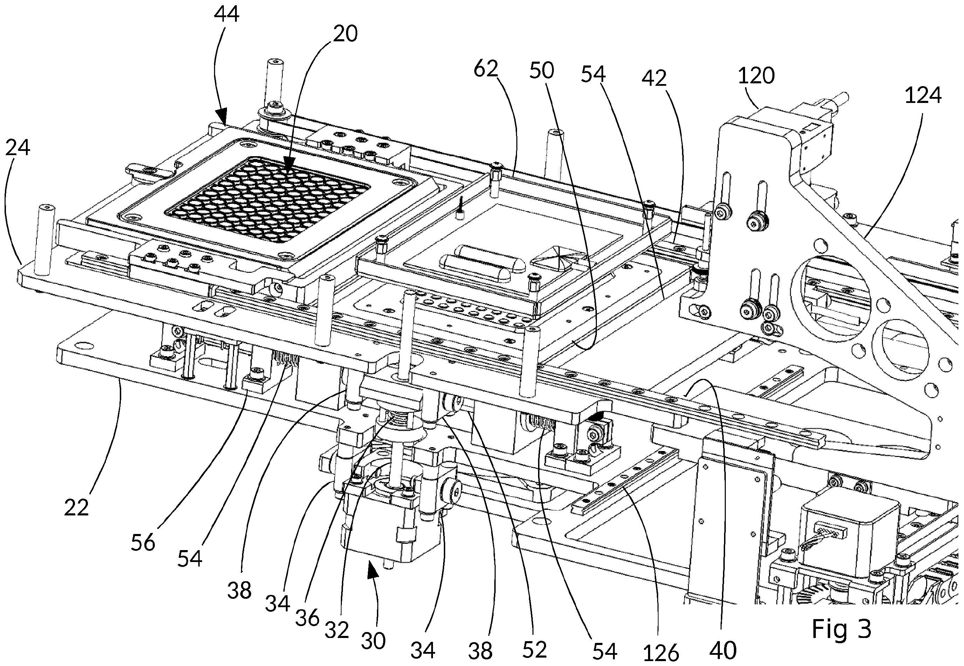

Figures 2 and 3 are, respectively, perspective views from opposite sides of a microplate transport sub-assembly of the embodiment of Figure 1;

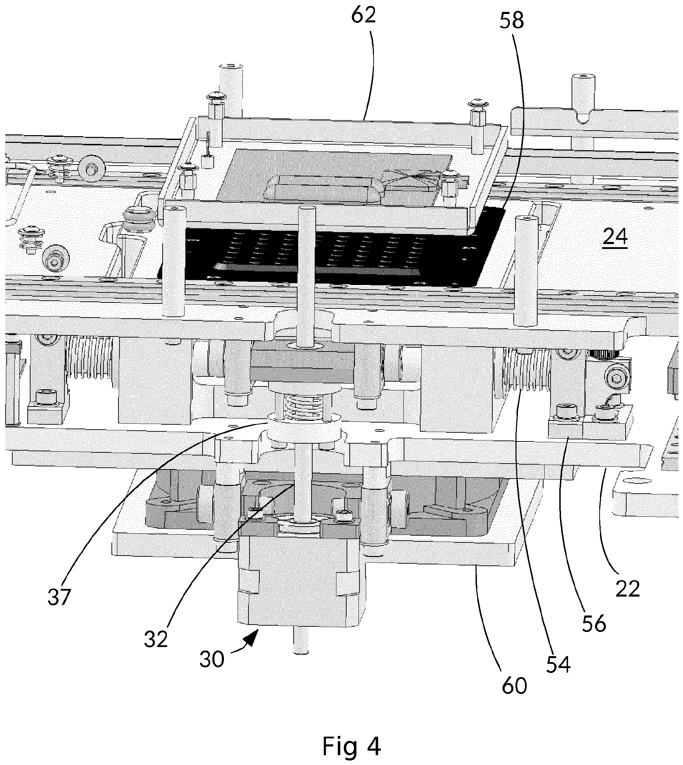

Figure 4 shows in more detail an actuator and shaker block being components of the transport sub-assembly of Figures 2 and 3; and
Figures 5 to 10 show the microplate transport sub-assembly of Figures 2 and 3 in successive operational steps, with a casing omitted for clarity.

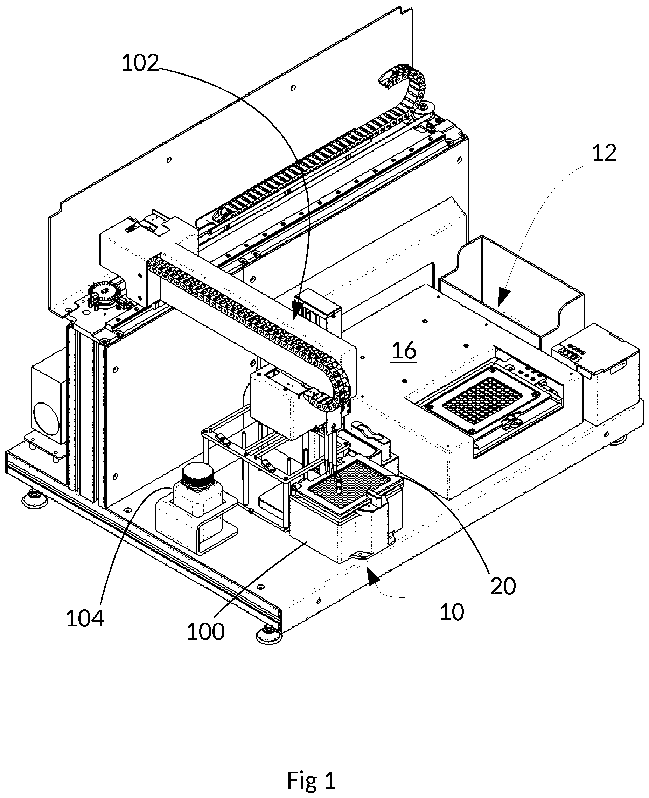

With reference to Figure 1, an automated analysis apparatus includes a filling station 10, a heating and cooling station 12 and an imaging station 14. A transport sub-assembly 18 is provided to receive a microplate 20 and transport it between the stations of the apparatus. In Figure 1, the transport sub-assembly 18 is protected by a cover 16.

The transport sub-assembly 18 comprises a metal base plate 22 and a metal upper plate 24. The upper plate 24 is carried on the base plate 22, their being interconnected by an elongate hinge rod 26 that is carried in bearing blocks 28, 30 secured to the respective plates 22, 24. The hinge rod 26 extends parallel to a respective edge of each of the plates 22, 24. This arrangement allows the upper plate 24 to pivot with respect to the base plate 22 about the axis of the hinge rod (which will be referred to as the "hinge axis"). In a lowered position, the upper plate 24 is positioned precisely parallel to and (in normal use) directly above the base plate 22. The parallelism of the lower and the upper plates 22, 24 is set through two adjustable stops (not shown). In a raised position, the upper plate 24 is pivoted about the hinge rod 26 to extend upwardly from the rod 26 diverging several degrees from the base plate 22.

To the opposite side of the base plate 22, approximately mid-way along the length of the hinge rod 26, an actuator 30 is secured to the base plate, the actuator 30 having a leadscrew 32 that extends normal to the base plate 22 towards the upper plate 24. The actuator 30 is carried on bearings 34 to allow it to pivot with respect to the base plate 22 about an axis that is parallel to the hinge axis. The actuator leadscrew 32 is connected to the upper plate 24 through a sprung threaded nut 37 and bearings 38 that allow it to pivot with respect to the upper plate 24 about an axis that is parallel to the hinge axis. The pivotal interconnections between the actuator 30 and the plates 22, 24 allow rotation of the actuator leadscrew 32 to cause smooth pivotal movement of the upper plate 24 about the hinge axis. A compression spring 36 removes the need for precise control of the linear actuator when the upper plate 22 is pulled against its stops, to ensure that the plates 24 and 22 lie parallel to each other.

Two spaced, parallel linear main slides 40, 42 are carried on the upper plate 24. The slides 40, 42 extend close to opposite edges of the upper plate 24 parallel to the hinge axis. A microplate carrier 44 is connected to the main slides 40, 42 such that it can travel over the upper plate 24 along the main slides 40, 42 under the control of a drive system that includes a stepper motor 46 connected to the carrier 44 by a drive belt 48. The microplate carrier 44 can receive and clamp a microplate 20 in place, thereby allowing the microplate to be transported along the length of the plates 22, 24 as the microplate carrier 44 is drawn along the main slides 40, 42 to locations precisely determined by the drive system.

A shaker block 50 is carried on the base plate 22. The shaker block 50 has spaced, parallel first and second bores, a portion of the hinge rod 26 extending through the first bore. A second, parallel shaker block rod 52 is secured to the base plate 22 by carriers 56 and passes through the second bore whereby the shaker block 50 can slide on the rods 26, 52 parallel to the hinge axis. Four compression springs 54 are carried on the rods 26, 52, each spring acting between a rod carrier 28, 56 that is fixed to the base plate 22 and the shaker block 50 to bias the shaker block 50 towards a neutral position. An aperture 54 extends through the upper plate 24 whereby the shaker block 50 projects through the aperture when the upper plate 24 is in the lowered position. An overhead heating plate 62 is carried on a cover plate 66 above the shaker block 50 and there is a heating and cooling plate 58 within the shaker block 50. The cover plate 66 is fixed to the upper plate 24 such that it and the overhead heating plate 63 moves with the upper plate 24. The heating and cooling plate 58 carries Peltier coolers and a fan 60 on its lower face. In addition to supplying heat to the microarray, the overhead heating plate 62 limits evaporation of volume in the microplate wells during longer incubation periods at higher temperatures.

The filling station 10 includes a block 100 into which a microplate 20 can be clamped in precise relation to a chassis of the apparatus. Also carried on the chassis is a two-axis automatic aspirator that 102 that can transfer a metered amount of reagent from a reservoir 104 to each well of a microplate contained within the block 10.

The imaging station 14 includes a camera 120 that is carried on the base plate 22 by a camera drive. The camera drive 122 includes a mount 124 that is carried on camera slides 126 that are secured to the base plate and extend transversely between the main slides 40, 42, a drive mechanism being provided to move the mount 124 and therefore the camera 120 to a precise transverse position along the camera slides 126.

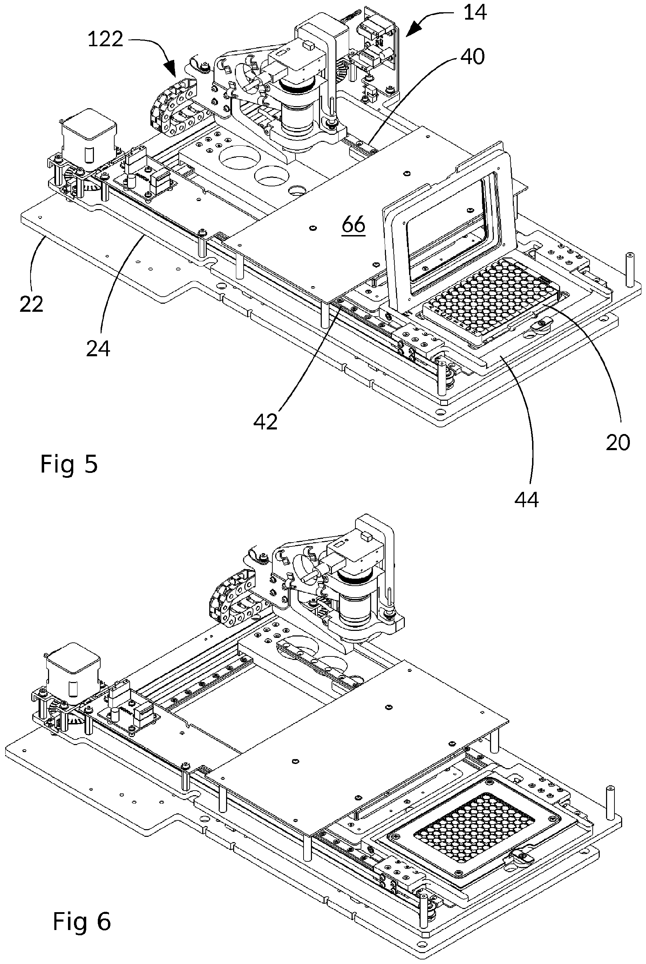

A microplate 20 filled with samples to be analysed is introduced into the apparatus at the filling station 10. A control system is aware of which of the wells of the microplate 20 contain a sample, and also can unambiguously identify each sample. The microplate 20 is clamped onto the block 100 and a control system is operated to cause the dispensing apparatus to introduce reagent into each well that is occupied by a sample. At this time, the control system has caused the microplate carrier 44 to be driven along the main slides 40, 42 to a position remote from the imaging station 14. The microplate carrier 44 is opened and the microplate 20 is positioned on it (Fig 5). The microplate carrier 44 is then closed to clamp the microplate 20 in place, whereupon the operator instructs the control system to start the analysis cycle (Fig 6).

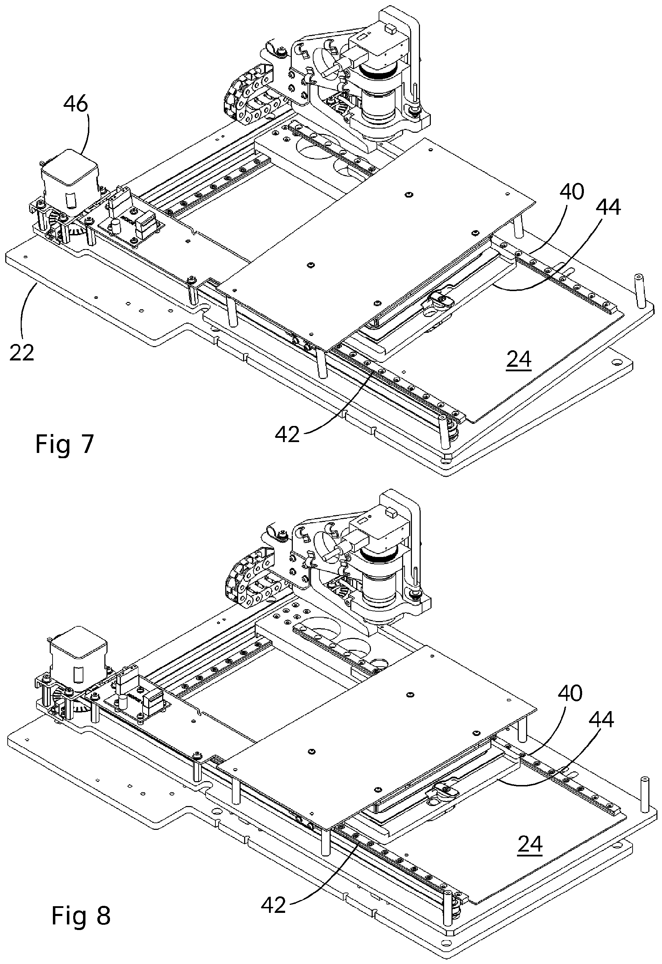

Next, the control system causes the actuator 30 to raise the upper plate 24 to its raised position, and then causes the stepper motor 46 to draw the microplate carrier 42 along the main slides 40, 42 until the microplate carrier 42 is directly above the heating and cooling plate 58 (Fig 7). (Note that in Figures 5 to 10, the heating and cooling plate 58 is obscured by the cover plate 66). The upper plate 24 is them moved to the lowered position, which brings the microplate carrier 42 into contact with the heating and cooling plate 58 within the shaker block 50 (Fig 8). It will be noted that this arrangement means that contact between the microplate carrier 42 and the heating and cooling plate 58 is achieved by movement that is substantially normal to the surface of the heating and cooling plate 58. During this phase, the stepper motor 46 is operated to oscillate in small steps of opposite directions. This causes the microplate carrier 42 to shake within the shaker block 50, this movement being accommodated by the compression springs 54.

The heating and cooling plate 58 and the overhead heating plate 62 are energised to bring the contents of the wells of the microplate 22 to the required temperature. The plates then maintain the required temperature for the specified dwell time during agitation by the shaker plate 50, and subsequently the fan 60 is operated to assist the Peltier coolers in the heating/cooling block to bring the contents of the wells down to a target temperature.

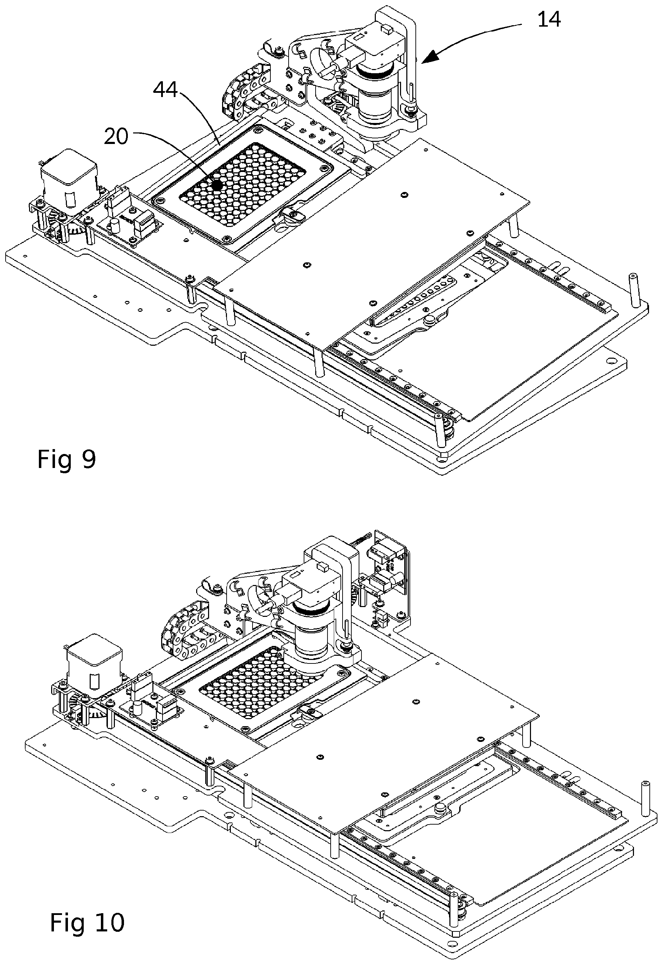

Once the reaction is complete, the control system causes the actuator 30 to raise the upper plate 24 to its raised position, and then causes the stepper motor 46 to draw the microplate carrier 42 along the main slides 40, 42 until the microplate carrier 44 is within the imaging station 14 (Fig 9). The upper plate 24 is them moved to the lowered position such that the microplate 22 lies in a horizontal plane below the camera 122. The microplate is presented in such a way that imaging from above or below the microplate well may take place depending on the application of the test process. This example shows imaging from the top.

The position of the microplate carrier 44 on the main slides 40, 42 is initially such that the camera 122 can image a first row of wells in the microplate 20 as the camera is moved stepwise along the camera slides. Once imaging of each row is complete, the microplate carrier 44 is advanced a short distance along the main slides 40, 42 to that the camera can inspect the wells of subsequent rows (Fig 10).

When imaging is complete, the camera 122 is withdrawn from above the microplate 20, the upper plate 24 to its raised position, drawn back along the main slides 40, 42. Prior to imaging, for microarray imaging for example the microplate would have been presented for aspiration to remove liquid from the wells and wash them. This can be done with the upper plate 24 still in its raised position; this can achieve better results and reduce the chance of contact between the aspirator needle and the wells, than would be the case were the microplate to be lying flat.

The upper plate 24 is then being lowered to resume the position shown in Figure 5 for removal by the operator.

## Claims

1. Analysis apparatus that includes automated microplate handling apparatus, which automated microplate handling apparatus comprises:
a) microplate carrying means (44) upon which a microplate (20) can be releasably secured;
b) transport means (18) operable to move the microplate carrying means (44) in a transport plane in which the microplate carrying means (44) is in a raised position, from one operational station (10, 12, 14) to another;
c) tilting means (26) operable to move the microplate carrying means (44)
• from a lowered position in which the microplate carrying means is in a horizontal plane
• to the raised position in which at least a portion of the microplate (20) remote from a hinge axis is tilted above the horizontal plane, wherein
• the tilting means (26) is operable to raise and lower the microplate carrying means (44) by tilting it about the hinge axis, which axis extends
• parallel to the transport plane and
• parallel to a direction in which the microplate carrying means is moved between operational stations (10, 12, 14).

2. Analysis apparatus according to claim 1 in which the hinge axis lies to one side of the operational stations (10, 12, 14).

3. Analysis apparatus according to claim 1 or claim 2 in which, in at least one operational station (10, 12, 14), operation of the tilting means between the raised and the lowered position causes, the microplate secured on the microplate carrying means (44) to be lowered into contact with functional apparatus at the operational station.

4. Analysis apparatus according to claim 3 in which the functional apparatus includes means (58) for heating and/or cooling the microplate.

5. Analysis apparatus according to claim 3 or claim 4 in which the functional apparatus includes means (102) for adding liquid to or removing liquid from wells of the microplate (20).

6. Analysis apparatus according to any preceding claim in which at least one operational station includes imaging apparatus (120).

7. A method of operating analysis apparatus that includes microplate handling apparatus comprising:
a) securing a microplate (20) to a microplate carrying means (44);
b) when the microplate carrying means (44) is in a raised position, in a sequence of successive movement operations, operating transport means (18) to cause the microplate carrying means (44) to move in a transport plane to successive operational stations (10, 12, 14) at each of which a step in an analysis process is performed;
c) **characterised in that** at least one movement operation comprises:
• operating a tilting means (26) to raise the microplate carrying means (44) by tilting the microplate carrying means about a hinge axis that extends parallel to the transport plane and parallel to a direction in which the microplate carrying means is moved between operational station from a lowered position in which the microplate carrying means is in a horizontal plane to the raised position, in which raised position at least a portion of the microplate remote from the hinge is tilted above the horizontal plane;
• moving the microplate carrying means (44) to a destination operational station (10, 12, 14); and
• lowering the microplate carrying means from the raised position to the lowered position.

8. A method according to claim 7 in which the hinge axis lies adjacent to the microplate carrying means (44).

## Patentansprüche

1. Analysevorrichtung, die eine automatisierte Mikrotiterplatten-Handhabungsvorrichtung umfasst, wobei die automatisierte Mikrotiterplatten-Handhabungsvorrichtung umfasst:
a) eine Mikrotiterplatten-Trageinrichtung (44), auf der eine Mikrotiterplatte (20) lösbar befestigt werden kann;
b) Transportmittel (18), die betreibbar sind, um die Mikrotiterplatten-Trageinrichtung (44) in einer Transportebene, in der sich die Mikrotiterplatten-Trageinrichtung (44) in einer angehobenen Position befindet, von einer Betriebsstation (10, 12, 14) zu einer anderen zu bewegen;
c) eine Kippeinrichtung (26), die betreibbar ist, um die Mikrotiterplatten-Trageinrichtung (44)
• aus einer abgesenkten Position, in der sich die Mikrotiterplatten-Trageinrichtung in einer horizontalen Ebene befindet
• in die angehobene Position zu bewegen, in der zumindest ein Teil der Mikrotiterplatte (20), der von einer Gelenkachse entfernt ist, oberhalb der horizontalen Ebene gekippt ist, wobei
• die Kippeinrichtung (26) betreibbar ist, um die Mikrotiterplatten-Trageinrichtung (44) anzuheben und abzusenken, indem sie um die Gelenkachse gekippt wird, wobei sich die Achse
• parallel zur Transportebene und
• parallel zu einer Richtung erstreckt, in der die Mikrotiterplatten-Trageinrichtung zwischen Betriebsstationen (10, 12, 14) bewegt wird.

2. Analysevorrichtung nach Anspruch 1, bei der die Gelenkachse zu einer Seite der Betriebsstationen (10, 12, 14) liegt.

3. Analysevorrichtung nach Anspruch 1 oder Anspruch 2, bei der in mindestens einer Betriebsstation (10, 12, 14) der Betrieb der Kippeinrichtung zwischen der angehobenen und der abgesenkten Position bewirkt, dass eine an der Mikrotiterplatten-Trageinrichtung (44) befestigte Mikrotiterplatte zur Berührung mit einer Funktionsvorrichtung an der Betriebsstation abgesenkt wird.

4. Analysevorrichtung nach Anspruch 3, bei der die Funktionsvorrichtung Mittel (58) zum Erhitzen und/oder Kühlen der Mikrotiterplatte umfasst.

5. Analysevorrichtung nach Anspruch 3 oder Anspruch 4, bei der die Funktionsvorrichtung Mittel (102) zum Hinzufügen von Flüssigkeit in oder Entfernen von Flüssigkeit aus Vertiefungen der Mikrotiterplatte (20) umfasst.

6. Analysevorrichtung nach einem der vorhergehenden Ansprüche, bei der mindestens eine Betriebsstation eine Abbildungsvorrichtung (120) umfasst.

7. Verfahren zum Betreiben einer Analysevorrichtung, die eine Mikrotiterplatten-Handhabungsvorrichtung umfasst, umfassend:
a) Befestigen einer Mikrotiterplatte (20) an einer Mikrotiterplatten-Trageinrichtung (44);
b) wenn sich die Mikrotiterplatten-Trageinrichtung (44) in einer angehobenen Position befindet, Betreiben der Transportmittel (18) in einer Folge aufeinanderfolgender Bewegungsvorgänge, um zu bewirken, dass sich die Mikrotiterplatten-Trageinrichtung (44) in einer Transportebene zu aufeinanderfolgenden Betriebsstationen (10, 12, 14) bewegt, an denen jeweils ein Schritt in einem Analyseprozess durchgeführt wird;
c) **dadurch gekennzeichnet, dass** mindestens ein Bewegungsvorgang umfasst:
• Betreiben einer Kippeinrichtung (26) zum Anheben der Mikrotiterplatten-Trageinrichtung (44), indem die Mikrotiterplatten-Trageinrichtung um eine Gelenkachse gekippt wird, die sich parallel zur Transportebene und parallel zu einer Richtung erstreckt, in der die Mikrotiterplatten-Trageinrichtung zwischen einer Betriebsstation von einer abgesenkten Position, in der sich das Mikroplatten-Tragmittel in einer horizontalen Ebene befindet, zur angehobenen Position bewegt wird, in welcher angehobenen Position zumindest ein Teil der Mikrotiterplatte, der vom Gelenk entfernt ist, oberhalb der horizontalen Ebene gekippt ist;
• Bewegen der Mikrotiterplatten-Trageinrichtung (44) zu einer Zielbetriebsstation (10, 12, 14); und
• Absenken der Mikrotiterplatten-Trageinrichtung von der angehobenen Position in die abgesenkte Position.

8. Verfahren nach Anspruch 7, bei dem die Gelenkachse neben der Mikrotiterplatten-Trageinrichtung (44) liegt.

## Revendications

1. Appareil d'analyse qui comprend un appareil automatisé de manipulation de microplaque, lequel appareil automatisé de manipulation de microplaque comprend :
a) un moyen de support de microplaque (44) sur lequel une microplaque (20) peut être fixée de manière libérable ;
b) un moyen de transport (18) servant à déplacer le moyen de support de microplaque (44) dans un plan de transport dans lequel le moyen de support de microplaque (44) est en position élevée, à partir d'un poste fonctionnel (10, 12, 14) jusqu'à un autre ;
c) un moyen d'inclinaison (26) servant à déplacer le moyen de support de microplaque (44)
• à partir d'une position abaissée dans laquelle le moyen de support de microplaque est dans un plan horizontal
• jusqu'à la position élevée dans laquelle au moins une partie de la microplaque (20) éloignée d'un axe d'articulation est inclinée au-dessus du plan horizontal,
• ledit moyen d'inclinaison (26) servant à élever et abaisser le moyen de support de microplaque (44) en l'inclinant autour de l'axe d'articulation, lequel axe s'étend
• parallèle au plan de transport et
• parallèle à une direction dans laquelle le moyen de support de microplaque est déplacé entre les postes fonctionnelles (10, 12, 14).

2. Appareil d'analyse selon la revendication 1, dans lequel l'axe d'articulation se trouve d'un côté des postes fonctionnels (10, 12, 14).

3. Appareil d'analyse selon la revendication 1 ou la revendication 2, dans lequel, dans au moins un poste fonctionnel (10, 12, 14), le fonctionnement du moyen d'inclinaison entre la position élevée et la position abaissée amène la microplaque fixée sur le moyen de support de microplaque (44) à être abaissée en contact avec un appareil fonctionnel au niveau du poste fonctionnel.

4. Appareil d'analyse selon la revendication 3, dans lequel l'appareil fonctionnel comprend un moyen (58) pour chauffer et/ou refroidir la microplaque.

5. Appareil d'analyse selon la revendication 3 ou la revendication 4, dans lequel l'appareil fonctionnel comprend un moyen (102) pour ajouter du liquide ou retirer du liquide des puits de la microplaque (20).

6. Appareil d'analyse selon l'une quelconque des revendications précédentes, dans lequel au moins un poste fonctionnel comprend un appareil d'imagerie (120).

7. Procédé de fonctionnement d'un appareil d'analyse qui comprend un appareil de manipulation de microplaque comprenant :
a) la fixation d'une microplaque (20) à un moyen de support de microplaque (44) ;
b) lorsque le moyen de support de microplaque (44) est dans une position élevée, dans une séquence d'opérations de déplacement successives, l'actionnement du moyen de transport (18) pour amener le moyen de support de microplaque (44) à se déplacer dans un plan de transport jusqu'à des postes fonctionnels successifs (10, 12, 14) au niveau de chacun desquels une étape d'un processus d'analyse est effectuée ;
c) **caractérisé en ce qu'**au moins une opération de déplacement comprend :
• l'actionnement d'un moyen d'inclinaison (26) pour élever le moyen de support de microplaque (44) en inclinant le moyen de support de microplaque autour d'un axe d'articulation qui s'étend parallèlement au plan de transport et parallèlement à une direction dans laquelle le moyen de support de microplaque est déplacé entre un poste fonctionnel à partir d'une position abaissée, dans laquelle le moyen de support de microplaque est dans un plan horizontal, jusqu'à la position élevée, position élevée dans laquelle au moins une partie de la microplaque éloignée de l'articulation est inclinée au-dessus du plan horizontal ;
• le déplacement du moyen de support de microplaque (44) jusqu'à un poste fonctionnel de destination (10, 12, 14) ; et
• l'abaissement du moyen de support de microplaque à partir de la position élevée jusqu'à la position abaissée.

8. Procédé selon la revendication 7, dans lequel l'axe d'articulation est adjacent au moyen de support de microplaque (44).
